# EUROPEAN PATENT APPLICATION

(11) **EP 4 804 587 A1**
(43) Date of publication of application: **09.09.2026**
(21) Application number: 23957140.9
(22) Date of filing: 31.10.2023
(51) Int. Cl.: H04W 16/18

(54) **METHOD FOR WIRELESS COMMUNICATION AND DEVICE**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/128643
(87) International publication number: WO 2025/091263

(57) **Abstract**

Disclosed are a method and a device for wireless communication. The method includes: receiving, by a terminal device, first information sent by a first non-terrestrial network (NTN) cell, where the first information is configured to indicate whether a TN-free coverage area is included in a first area, and the first area is a virtual TN coverage area associated with the first NTN cell.

## Description

### TECHNICAL FIELD

The present disclosure relates to the field of communication technologies, and in particular to a method and a device for wireless communication.

### BACKGROUND

A non-terrestrial network (NTN) cell may notify a terminal device of terrestrial network (TN) cells within its coverage area through auxiliary information, enabling the terminal device to preferentially access the TN cells. In related art, an NTN cell may organize multiple TN cells into a virtual TN coverage area and notify the terminal device of information about the virtual TN coverage area, thereby reducing the number of message bits occupied by the auxiliary information. In this case, how to improve the performance of the terminal device on the basis of introducing the virtual TN coverage area remains a problem to be solved.

### SUMMARY

Embodiments of the present disclosure provide a method and a device for wireless communication. Aspects involved in the present disclosure are described below.

In a first aspect, embodiments of the present disclosure provide a method for wireless communication. In the method, a terminal device receives first information sent by a first non-terrestrial network (NTN) cell, where the first information is configured to indicate whether a TN-free coverage area is included in a first area, and the first area is a virtual TN coverage area associated with the first NTN cell.

In a second aspect, embodiments of the present disclosure provide a method for wireless communication. In the method, a network device sends first information to a terminal device, where the first information is configured to indicate whether a TN-free coverage area is included in a first area; the network device is a network device corresponding to a first non-terrestrial network (NTN) cell; and the first area is a virtual TN coverage area associated with the first NTN cell.

In a third aspect, embodiments of the present disclosure provide a terminal device, including: a transceiver unit, configured to receive first information sent by a first non-terrestrial network (NTN) cell, where the first information is configured to indicate whether a TN-free coverage area is included in a first area, and the first area is a virtual TN coverage area associated with the first NTN cell.

In a fourth aspect, embodiments of the present disclosure provide a network device, the network device is a network device corresponding to a first non-terrestrial network (NTN) cell, including: a first sending unit, configured to send first information to a terminal device, where the first information is configured to indicate whether a TN-free coverage area is included in a first area, and the first area is a virtual TN coverage area associated with the first NTN cell.

In a fifth aspect, embodiments of the present disclosure provide a terminal device, including a processor, a memory, and a communication interface. The memory is configured to store one or more computer programs, and the processor is configured to call the programs in the memory to cause the terminal device to perform part or all of the operations described in the method of the first aspect.

In a sixth aspect, embodiments of the present disclosure provide a network device, including a processor, a memory, and a communication interface. The memory is configured to store one or more computer programs, and the processor is configured to call the programs in the memory to cause the network device to perform part or all of the operations described in the method of the second aspect.

In a seventh aspect, embodiments of the present disclosure further provide a communication system, including the foregoing terminal device and/or network device. In another possible implementation, the system may further include other devices that interact with the terminal device or the network device in the solutions provided in the embodiments of the present disclosure.

In an eighth aspect, embodiments of the present disclosure further provide a computer-readable storage medium having stored thereon a program, and the program causes a computer to perform part or all of the operations described in the method of the first aspect or the second aspect.

In a ninth aspect, embodiments of the present disclosure further provide a computer program product including a non-transitory computer-readable storage medium storing a computer program, where the program is operable to cause a terminal device to perform part or all of the operations in the method of the first aspect or the second aspect. In some implementations, the computer program product may be a software installation package.

In a tenth aspect, embodiments of the present disclosure provide a chip, including a memory and a processor. The processor may call and run a computer program from the memory to perform part or all of the operations described in the method of the first aspect or the second aspect.

In some embodiments of the present disclosure, by indicating whether a virtual TN area within the coverage of an NTN cell includes a TN-free coverage area (e.g., via the first information), the coverage status of TN cells in the virtual TN area is notified to the terminal device. Additionally, the terminal device can determine its TN cell measurement strategy in the virtual TN area based on the first information, thereby helping to reduce power consumption of the terminal device.

### BRIEF DESCRIPTION OF THE DRAWINGS

FIG. 1A is a schematic diagram of a communication scenario applicable to some embodiments of the present disclosure.
FIG. 1B is a schematic diagram of another communication scenario applicable to some embodiments of the present disclosure.
FIG. 1C is a schematic diagram of yet another communication scenario applicable to some embodiments of the present disclosure.
FIG. 2 is a schematic diagram of NTN coverage and TN coverage.
FIG. 3 is a schematic diagram flow chart of wireless communication method according to some embodiments of the present disclosure.
FIG. 4A is a schematic diagram of a way to divide virtual TN areas in an NTN cell.
FIG. 4B is a schematic diagram of another way to divide virtual TN areas in an NTN cell.
FIG. 5A is a schematic diagram of yet another way to divide virtual TN areas in an NTN cell.
FIG. 5B is a schematic diagram of still another way to divide virtual TN areas in an NTN cell.
FIG. 6A is a schematic flow chart of a method for determining a first condition.
FIG. 6B is a schematic flow chart of another method for determining a first condition.
FIG. 7 is a schematic structural diagram of a terminal device according to embodiments of the present disclosure.
FIG. 8 is a schematic structural diagram of a network device according to embodiments of the present disclosure.
FIG. 9 is a schematic diagram of a device according to embodiments of the present disclosure.

### DETAILED DESCRIPTION OF THE EMBODIMENTS

The technical solution of the present disclosure will be described below with reference to the accompanying drawings.

### Communication System Architecture

The embodiments of this disclosure may be applied to various communication systems. For example, the embodiments may be applied to a Global System for Mobile Communications (GSM) system, Code Division Multiple Access (CDMA) system, Wideband Code Division Multiple Access (WCDMA) system, General Packet Radio Service (GPRS) system, Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, non-terrestrial network (NTN) system, Universal Mobile Telecommunications System (UMTS), Wireless Local Area Network (WLAN) system, Wireless Fidelity (WiFi) system, or 5th-Generation (5G) system. The embodiments may also be applied to other communication systems and radio technologies, such as 6th-Generation (6G) mobile communication systems, satellite communication systems, or other future communication systems.

Generally, traditional communication systems support limited connections and are easy to implement. However, with the development of communication technologies, communication systems may support not only traditional cellular communication but also one or more other types of communication. For example, the communication system may support one or more of the following communications: Device-to-Device (D2D) communication, Machine-to-Machine (M2M) communication, Machine Type Communication (MTC), Vehicle-to-Vehicle (V2V) communication, and Vehicle-to-Everything (V2X) communication. The embodiments of this disclosure may also be applied to communication systems supporting the above communication methods.

The communication system in the embodiments of the present disclosure may be applied to Carrier Aggregation (CA) scenarios, Dual Connectivity (DC) scenarios, or Standalone (SA) deployment scenarios.

The communication system in the embodiments of the present disclosure may be applied to unlicensed spectrum. The unlicensed spectrum may also be considered as shared spectrum. Alternatively, the communication system in the embodiments of the present disclosure may also be applied to licensed spectrum. The licensed spectrum may also be considered as dedicated spectrum.

The embodiments of this disclosure may be applied to Non-Terrestrial Network (NTN) systems, or terrestrial network (TN) systems. By way of example and not limitation, the NTN system includes an NR-based NTN system and an Internet of Things (IoT)-based NTN system.

The embodiments of the present disclosure describe various embodiments in combination with network devices and terminal devices. The terminal device may also be referred to as User Equipment (UE), access terminal, user unit, user station, Mobile Station (MS), Mobile Terminal (MT), remote station, remote terminal, mobile device, user terminal, terminal, wireless communication device, user agent, or user apparatus, etc.

In some embodiments, the terminal device may be a Station (ST) in a WLAN, a cellular phone, a cordless phone, a Session Initiation Protocol (SIP) phone, a Wireless Local Loop (WLL) station, a Personal Digital Assistant (PDA) device, a handheld device with wireless communication capabilities, a computing device, another processing devices connected to a wireless modem, a vehicle-mounted device, a wearable device, a terminal device in a next-generation communication system (e.g., an NR system), or a terminal device in a future evolved public Land Mobile Network (PLMN).

In some embodiments, the terminal device may be a device that provides voice and/or data connectivity to users. For example, the terminal device may be a handheld device with wireless connection capabilities or a vehicle-mounted device, etc. The terminal device in the embodiments of the present disclosure may be a mobile phone, a tablet computer (Pad), a notebook computer, a palmtop computer, a mobile internet device (MID), a wearable device, a virtual reality (VR) device, an augmented reality (AR) device, a wireless terminal in industrial control, a wireless terminal in unmanned driving, a wireless terminal in remote medical surgery, a wireless terminal in a smart grid, a wireless terminal in transportation safety, a wireless terminal in a smart city, or a wireless terminal in a smart home, etc. Optionally, the terminal device may be used as a base station. For example, the terminal device may act as a scheduling entity that provides sidelink signals between terminal devices in V2X or D2D, etc. For example, a cellular phone and a car communicate with each other using sidelink signals. A cellular phone communicates with a smart home device without relaying communication signals through a base station.

In the embodiments of the present disclosure, the terminal device may be deployed on land, such as indoors or outdoors, handheld, wearable, or vehicle-mounted, on water (such as a ship), or in the air (such as an airplane, balloon, or satellite).

In the embodiments of the present disclosure, the terminal device may be a mobile phone, a tablet computer (pad), a computer with wireless transceiver capabilities, a Virtual Reality (VR) terminal device, an Augmented Reality (AR) terminal device, a wireless terminal device in industrial control, a wireless terminal device in unmanned driving, a wireless terminal device in remote medical care, a wireless terminal device in a smart grid, a wireless terminal device in transportation safety, a wireless terminal device in a smart city, or a wireless terminal device in a smart home. The terminal device involved in the embodiments of the present disclosure may also be called a terminal, User Equipment (UE), access terminal device, vehicle-mounted terminal, industrial control terminal, UE unit, UE station, mobile station, remote station, remote terminal device, mobile device, UE, wireless communication device, UE agent, or UE apparatus, etc. The terminal device may also be fixed or mobile.

By way of example and not limitation, in the embodiments of the present disclosure, the terminal device may also be a wearable device. A wearable device may also be called a wearable smart device, which is a general term for devices that can be worn by applying wearable technology to intelligently design daily wear, such as glasses, gloves, watches, clothing, and shoes. A wearable device is a portable device that is directly worn on the body or integrated into the user's clothing or accessories. A wearable device is not only a hardware device, but also realizes powerful functions through software support, data interaction, and cloud interaction. In a broad sense, wearable smart devices include those with full functions and large sizes that can realize complete or partial functions without relying on smartphones, such as smart watches or smart glasses, and those that focus on a certain type of disclosure function and need to be used with other devices (such as smartphones), such as various smart bracelets and smart jewelry for physical sign monitoring.

A network device in the embodiments of the present disclosure may be a device for communicating with terminal devices, and may also be called an access network device or a wireless access network device. For example, the network device may be a base station. A network device in the embodiments of the present disclosure may also be referred to as a Radio Access Network (RAN) node (or device) that accesses a terminal device to a wireless network. A base station may broadly cover various names or be replaced with the following names, such as: NodeB (NodeB), evolved NodeB (eNB), next-generation NodeB (gNB), relay station, Transmitting and Receiving Point (TRP), Transmitting Point (TP), Master eNB (MeNB), Secondary eNB (SeNB), Multi-Standard Radio (MSR) node, home base station, network controller, access node, wireless node, Access Point (AP), transmission node, transceiver node, Baseband Unit (BBU), Remote Radio Unit (RRU), Active Antenna Unit (AAU), Remote Radio Head (RRH), Central Unit (CU), Distributed Unit (DU), positioning node, etc. The base station may be a macro base station, a micro base station, a relay node, a donor node, or the like, or a combination thereof. The base station may also refer to a communication module, modem, or chip disposed in the foregoing equipment or device. The base station may also be a mobile switching center, a device that undertakes base station functions in Device-To-Device (D2D), Vehicle-To-Everything (V2X), or Machine-To-Machine (M2M) communication, a network-side device in a 6G network, a device that undertakes base station functions in a future communication system, etc. The base station can support networks with the same or different access technologies. The embodiments of the present disclosure do not limit the specific technology and specific device form adopted by the network device.

The base station may be fixed or mobile. For example, a helicopter or drone may be configured to act as a mobile base station, and one or more cells may move according to the position of the mobile base station. In other examples, a helicopter or drone may be configured to be used as a device for communicating with another base station.

In some deployments, a network device in the embodiments of the present disclosure may refer to a CU or a DU, or the network device includes a CU and a DU. A gNB may also include an AAU.

The network device and the terminal device may be deployed on land, such as indoors or outdoors, handheld, or vehicle-mounted, on water, or on aircraft, balloons, and satellites in the air. The embodiments of the present disclosure do not limit the scenarios where network devices and terminal devices are located.

By way of example and not limitation, in the embodiments of the present disclosure, the network device may have mobility characteristics, for example, the network device may be a mobile device. In some embodiments of the present disclosure, the network device may be a satellite or a balloon station. For example, the satellite may be a Low Earth Orbit (LEO) satellite, a Medium Earth orbit (MEO) satellite, a Geostationary Earth Orbit (GEO) satellite, a High Elliptical Orbit (HEO) satellite, etc. In some embodiments of the present disclosure, the network device may also be a base station set up on land, water, or other locations.

In the embodiments of the present disclosure, a network device may provide services for a cell, and a terminal device communicates with the network device through transmission resources (for example, frequency domain resources, or spectrum resources) used by the cell. The cell may be a cell corresponding to the network device (for example, a base station), and may belong to a macro base station or a base station corresponding to a small cell. The small cell may include: a metro cell, a micro cell, a pico cell, a femto cell, etc. These small cells have the characteristics of small coverage and low transmission power, and are suitable for providing high-rate data transmission services.

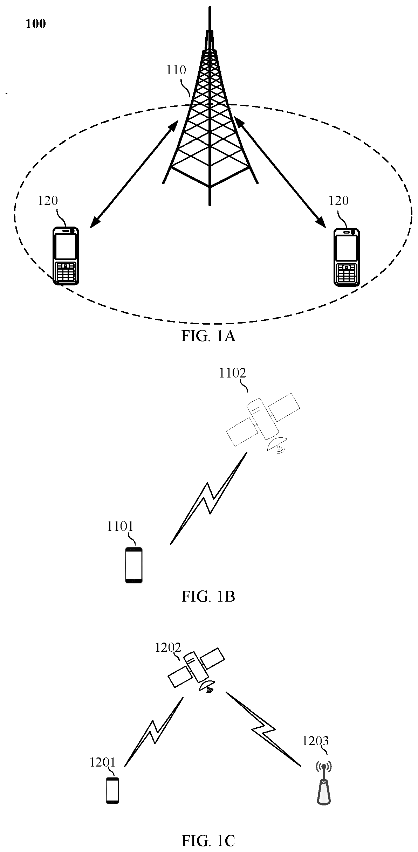

Exemplarily, FIG. 1A is a schematic diagram of the architecture of a communication system applied to the embodiments of the present disclosure. As shown in FIG. 1A, the communication system 100 may include a network device 110, and the network device 110 may be a device in communication with a terminal device 120 (or called a communication terminal, terminal). The network device 110 may provide network coverage for a particular geographic area and may communicate with the terminal device located within the coverage area.

FIG. 1A exemplarily shows one network device and two terminal devices. In some embodiments of the present disclosure, the communication system 100 may include multiple network devices, and each network device's coverage area may include other numbers of terminal devices. The embodiments of the present disclosure are not limited thereto.

Exemplarily, FIG. 1B is a schematic diagram of the architecture of another communication system provided by an embodiment of the present disclosure. Referring to FIG. 1B, the communication system may include a terminal device 1101 and a satellite 1102, and wireless communication can be performed between the terminal device 1101 and the satellite 1102. The network formed between the terminal device 1101 and the satellite 1102 may also be called an NTN. In the architecture of the communication system shown in FIG. 1B, the satellite 1102 may have the function of a base station, and direct communication can be performed between the terminal device 1101 and the satellite 1102. In this system architecture, the satellite 1102 may be called a network device. In some embodiments of the present disclosure, the communication system may include multiple network devices 1102, and each network device 1102's coverage area may include other number of terminal devices. The embodiments of the present disclosure are not limited thereto.

Exemplarily, FIG. 1C is a schematic diagram of the architecture of another communication system provided by an embodiment of the present disclosure. Referring to FIG. 1C, the communication system may include a terminal device 1201, a satellite 1202, and a base station 1203. Wireless communication can be performed between the terminal device 1201 and the satellite 1202, and communication can be performed between the satellite 1202 and the base station 1203. The network formed among the terminal device 1201, the satellite 1202, and the base station 1203 may also be called an NTN. In the architecture of the communication system shown in FIG. 1C, the satellite 1202 may not have the function of a base station, and communication between the terminal device 1201 and the base station 1203 needs to be relayed through the satellite 1202. In this system architecture, the base station 1203 may be called a network device. In some embodiments of the present disclosure, the communication system may include multiple network devices 1203, and each network device 1203's coverage area may include other number of terminal devices. The embodiments of the present disclosure are not limited thereto.

It should be noted that FIGS. 1A to 1C only schematically show the system applicable to the present disclosure. Of course, the method shown in the embodiments of the present disclosure may also be applicable to other systems, such as a 5G communication system, an LTE communication system, etc. The embodiments of the present disclosure are not specifically limited thereto.

In some embodiments of the present disclosure, the wireless communication systems shown in FIGS. 1A to 1C may also include other network entities such as a mobility management entity (MME) and an access and mobility management function (AMF). The embodiments of the present disclosure are not limited thereto.

It should be understood that devices with communication functions in the network/system in the embodiments of the present disclosure may be called communication devices. Taking the communication system 100 shown in FIG. 1A as an example, the communication devices may include a network device 110 and a terminal device 120 with communication functions. The network device 110 and the terminal device 120 may be the specific devices described above, which will not be repeated here. The communication devices may also include other devices in the communication system 100, such as network controllers, mobility management entities, and other network entities. The embodiments of the present disclosure are not limited thereto.

It should be understood that the "indication" mentioned in the embodiments of the present disclosure may be a direct indication, an indirect indication, or an indication of an association relationship. For example, A indicating B may mean that A directly indicates B (for example, B can be obtained through A), or A indirectly indicates B (for example, A indicates C, and B can be obtained through C), or there is an association relationship between A and B.

In the description of the embodiments of the present disclosure, the term "corresponding" may indicate a direct or indirect corresponding relationship between two parties, an association relationship between two parties, or a relationship of indication and being indicated, configuration and being configured, etc.

The "configuration" in the embodiments of the present disclosure may include configuration through at least one of system messages, radio resource control (RRC) signaling, and media access control element (MAC CE).

In some embodiments of the present disclosure, "predefined" or "preset" may be implemented by pre-storing corresponding codes, tables, or other means that can be used to indicate relevant information in a device (for example, including a terminal device and a network device). The present disclosure does not limit the specific implementation manner. For example, predefined may mean defined in a protocol.

In some embodiments of the present disclosure, the "protocol" may refer to a standard protocol in the communication field, such as an LTE protocol, an NR protocol, and related protocols applied to future communication systems. The present disclosure is not limited thereto.

To facilitate understanding, the communication process involved in the embodiments of the present disclosure is described below.

### NTN

Currently, 3GPP is studying NTN technology. NTN generally provides communication services to ground users through satellite communication. Compared with terrestrial communication networks (such as terrestrial cellular network communication), satellite communication has many unique advantages.

First, satellite communication is not limited by the user's geographical location. For example, ordinary terrestrial communication networks cannot cover areas such as oceans, mountains, deserts, and other areas where network devices cannot be set up. Or, terrestrial communication networks do not cover some sparsely populated areas. For satellite communication, since one satellite can cover a large ground area and the satellite can orbit the earth, theoretically, every corner of the earth can be covered by a satellite communication network.

Second, satellite communication has great social value. Satellite communication can cover remote mountainous areas, poor and backward countries or regions at a lower cost, so that people in these regions can enjoy advanced voice communication and mobile Internet technologies. From this perspective, satellite communication helps to narrow the digital divide with developed regions and promote the development of these regions.

Third, satellite communication has the advantage of a long communication distance, and the increase in communication distance does not significantly increase communication costs.

Finally, satellite communication has high stability and is not affected by natural disasters.

Communication satellites are categorized into Low Earth Orbit (LEO) satellites, Medium Earth Orbit (MEO) satellites, Geostationary Earth Orbit (GEO) satellites, and High Elliptical Orbit (HEO) satellites, etc., based on their orbital altitudes. At the current stage, the primary research focus is on LEO satellites and GEO satellites.

LEO satellites typically operate at altitudes ranging from 500 km to 1500 km. Correspondingly, the orbital period of LEO satellites is about 1.5 hours to 2 hours. For LEO satellites, the signal propagation delay for single-hop user communication is generally less than 20 ms. The maximum visible time of LEO satellites is about 20 minutes. LEO satellites have the advantages of short signal propagation distance, low link loss, and low transmit power requirements for user terminal devices.

GEO satellites are positioned at an orbital altitude of 35,786 km, with an orbital period of 24 hours (synchronized with Earth's rotation). For GEO satellites, the signal propagation delay for single-hop user communication is typically about 250 ms.

To ensure satellite coverage and improve the system capacity of the entire satellite communication system, satellites usually employ multi-beam technology to cover ground areas. As a result, one satellite may generate dozens or even hundreds of beams to cover ground regions, with each beam covering a ground area approximately tens to hundreds of kilometers in diameter.

In an NTN system, the cell projected by a satellite to the ground may be fixed relative to the ground or move alongside the satellite. Taking the serving cell corresponding to a LEO satellite as an example, the ground-projected cells of LEO satellites typically fall into two categories: quasi-earth fixed cells and quasi-earth mobile cells.

A cell that is relatively stationary with respect to the ground may refer to a serving cell with a fixed geographic coverage area. For instance, different LEO satellites may cover the same ground area by adjusting the antenna pointing angle; when one LEO satellite is no longer able to cover the area, it is replaced by another LEO satellite. Satellites in geosynchronous orbit (GSO) can also project fixed cells onto the ground.

A mobile cell may refer to a serving cell with a dynamically changing geographic coverage area. For example, the ground-projected cell of a LEO satellite may move in conjunction with the satellite. Generally, when the antenna of a LEO satellite is perpendicular to the ground, the ground-projected cell is a mobile cell. Whether a LEO satellite functions as an independent base station or a relay base station, the mobile cell moves synchronously with the LEO satellite, and the relative distance between the LEO satellite and terminal devices is constantly changing. After a certain period, the signal from the current LEO satellite may no longer cover the terminal device; if the network is well-deployed, the next LEO satellite will take over coverage. Due to the spherical nature of the satellite system, the next LEO satellite may approach from any direction.

A cellular communication system may include terminal devices and network devices. Network devices, such as base stations, are usually built at high positions relative to the ground, such as rooftops or mountain tops. Each base station can only cover a certain range. For example, the radius of the coverage range is from several hundred meters to 100 kilometers. The specific coverage range of a base station depends on the frequency band. For example, low frequency bands (such as 700 MHz) have a larger coverage range, and high frequency bands (such as 24 GHz) have a smaller coverage range.

The aforementioned base stations are suitable for coverage in urban areas or suburbs and can achieve efficient coverage, but they are not suitable for coverage in rural areas, resulting in low coverage efficiency. This is because operators usually have to build a base station every 100 km to achieve coverage, which is expensive, while rural areas have low population density and limited revenue potential.

With the continuous development of cellular communication networks and the advancement of technologies such as the Internet of Things, there is a demand for coverage in areas with low population density or remote or inaccessible areas, such as monitoring the operation of oil pipelines in desert areas and supporting communications for ocean-going cargo ships in the ocean. Existing terrestrial base stations cannot support such scenarios, so satellite communication (NTN) has emerged.

Compared with TN networks, NTN networks have a large coverage range, but the amount of data that can be transmitted by NTN networks is very limited. Therefore, operators hope that terminal devices will preferentially camp on and access TN networks; only when there is no TN network coverage, they will camp on and access NTN networks.

Since terminal devices preferentially camp on and access TN networks, terminal devices camping on NTN cells need to continuously measure whether TN cells exist. If a terminal device always measures the TN network, it will incur additional power consumption, which will adversely affect the power utilization of the terminal device.

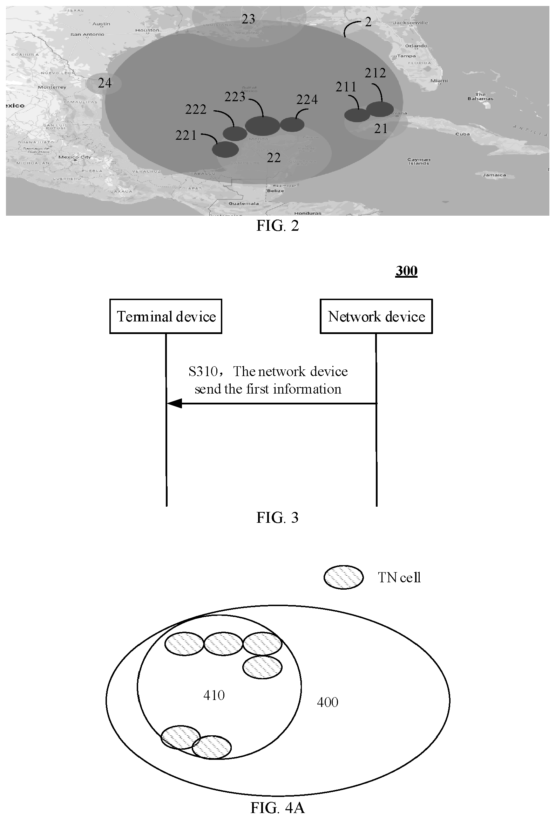

FIG. 2 is an example diagram of NTN coverage and TN coverage. Referring to FIG. 2, the coverage range 2 of an NTN cell may include multiple coverage ranges of TN cells, such as TN area 221, TN area 222, TN area 223, TN area 224, TN area 211, and TN area 212. It can be seen that only a small part of the NTN cell has TN cell coverage. If all terminal devices always detect TN cells within the NTN range, additional power of the terminal devices will be consumed.

Therefore, 3GPP introduces auxiliary information, which is used to notify terminal devices in the NTN cell of "which areas have TN coverage". In this way, only terminal devices in areas with TN coverage need to measure the frequency point where the TN is located, while terminal devices outside the TN coverage area do not need to measure the frequency point where the TN is located. The NTN cell can notify the terminal device of the foregoing auxiliary information in multiple ways, such as broadcasting the foregoing auxiliary information in a system message or carrying the foregoing auxiliary information in dedicated signaling. Table 1 shows an example format of the foregoing auxiliary information.

**Table 1**

| | Center point | Radius | Frequency point |
|---|---|---|---|
| TN Area 1 | 105°E, 31°N | 100 km | F1 |
| TN Area 2 | 100°E, 25°N | 55 km | F2 |

After obtaining the foregoing auxiliary information, a terminal device in the NTN cell can determine whether it is in a certain TN area according to its geographical location. If the terminal device is in a certain TN area (e.g., TN Area 1 in Table 1), the terminal device measures the frequency point F1 corresponding to TN Area 1 to find a TN cell. If the terminal device finds a TN cell and the signal quality of the TN cell is higher than the camping threshold, the terminal device camps on the TN cell; if the terminal device does not find a TN cell, it continues to measure the frequency point F1.

Since the coverage range of an NTN cell is large, the NTN coverage range may include multiple TN cells. If each TN area is indicated in detail, the number of TN areas indicated by the NTN cell may be large, i.e., the auxiliary information may require more bits. Referring again to FIG. 2, the NTN coverage range 2 includes 6 TN areas. Then the NTN cell needs to notify the terminal device of information such as frequency points and coverage ranges of these 6 TN areas, and the auxiliary information may require more transmission resources.

Therefore, an NTN cell can combine multiple TN cells to generate a virtual TN coverage area (also referred to as a virtual TN area). For example, TN area 221, TN area 222, TN area 223, and TN area 224 in FIG. 2 can be combined to generate a virtual TN coverage area 22, or TN area 211 and TN area 212 in FIG. 2 can be combined to generate a virtual TN coverage area 21. In addition, FIG. 2 also shows a virtual TN coverage area 23 and a virtual TN coverage area 24 (with TN cells in their coverage ranges not shown in FIG. 2).

Based on this, the NTN cell only needs to notify the terminal device of virtual TN coverage areas within its coverage range (such as the center points and radii of virtual TN coverage area 21 and virtual TN coverage area 22), without notifying the terminal device of detailed information of TN cells within the virtual TN coverage areas, which helps to reduce the message size of the auxiliary information, thereby reducing the number of message bits occupied by the auxiliary information.

How NTN cells organize TN coverage information is a network implementation and is generally not specified by standards. When TN coverage information is updated, the NTN cell can notify the terminal device to receive new TN coverage information through a system information change notification mechanism.

In this case, how to improve the performance of the terminal device on the basis of introducing the virtual TN coverage area is a problem to be solved. From FIG. 2, it can be seen that only part of the virtual TN area 22 is covered by TN cells. If the terminal device continuously detects TN cells in the entire virtual TN area 22, some problems may occur. For example, if the terminal device is located in the virtual TN area 22 but not in the TN cell coverage area (that is, the terminal device is located in a TN-free coverage area in the virtual TN area 22), the terminal device will continuously measure the frequency points corresponding to the TN cell, thereby increasing the power consumption of the terminal device.

To solve the foregoing problem, the embodiments of the present disclosure provide a method for wireless communication, which notifies the terminal device of the coverage status of TN cells in the virtual TN area by indicating whether the virtual TN area within the coverage of the NTN cell includes a TN-free coverage area (for example, indicated by the first information).

FIG. 3 is a schematic flowchart of a method for wireless communication provided by embodiments of the present disclosure. The method shown in FIG. 3 can be applied to a terminal device and a network device in an NTN system. The method provided by the embodiment of the present disclosure will be described below from the perspective of interaction between the terminal device and the network device in the NTN system.

The method shown in FIG. 3 may include operation S310.

In S310, the terminal device receives first information sent by a first NTN cell. Or, the network device sends the first information to the terminal device. The network device is a network device corresponding to the first NTN cell.

The foregoing first information may be configured to indicate whether a TN-free coverage area is included in the first area, and the first area may be a virtual TN coverage area associated with the first NTN cell. For example, the first area may be one or more of the virtual TN coverage areas included in the coverage range of the first NTN cell. Referring again to FIG. 2, taking the coverage range 2 in FIG. 2 as the coverage range of the first NTN cell as an example, the first area may be one or more of virtual TN coverage area 21, virtual TN coverage area 22, virtual TN coverage area 23, and virtual TN coverage area 24. That is, the first information may be configured to indicate whether the virtual TN coverage area 21 includes a TN-free coverage area, or the first information may also be configured to indicate whether all virtual TN coverage areas in the coverage range 2 include TN-free coverage areas.

In some embodiments, the first information may be indicated independently or carried in the aforementioned auxiliary information. Table 2 shows an example of the first information.

**Table 2**

| | Center point | Radius | Frequency point | Whether to include TN-free coverage area |
|---|---|---|---|---|
| Virtual TN Area 1 | 105°E, 31°N | 100 km | F1 | Include TN-free coverage area / "1" |
| Virtual TN Area 2 | 100°E, 25°N | 55 km | F2 | Do not include TN-free coverage area / "0" |

Referring to Table 2, taking the first area as virtual TN area 1 and/or virtual TN area 2 as an example, the first information may be the content in the last column of Table 2: "Include TN-free coverage area" and "Do not include TN-free coverage area".

Alternatively, the first information may be auxiliary information (such as the auxiliary information shown in Table 2), and the first information indicates whether the first area includes a TN-free coverage area through the content in the last column.

In some embodiments, the first information may indicate whether the first area includes a TN-free coverage area through different values of a bit (such as 1 bit), which helps reduce transmission resources and facilitates implementation. For example, "1" indicates that a TN-free coverage area is included, and "0" indicates that no TN-free coverage area is included. The meaning of the bit value indication provided herein is merely illustrative, and this application is not limited thereto.

In some embodiments, the first information may be configured to determine a TN cell measurement strategy of the terminal device in the first area. The TN cell measurement strategy of the terminal device in the first area may include, for example, stopping measuring the TN cell and/or continuing to measure the TN cell. Continuing to measure the TN cell may also include continuously measuring the TN cell in the first area.

The measurement of the TN cell by the terminal device can also be understood as the measurement of the frequency point corresponding to the TN cell by the terminal device. That is, the TN cell measurement strategy of the terminal device in the first area may include stopping measuring the frequency point corresponding to the TN cell and/or continuing to measure the frequency point corresponding to the TN cell.

In some embodiments, the terminal device may adopt different TN cell measurement strategies in the first area including a TN-free coverage area and the first area not including a TN-free coverage area, thereby helping to reduce power consumption of the terminal device.

For example, if the first information indicates that the first area includes a TN-free coverage area and the terminal device does not measure the TN cell, the measurement strategy is to stop measuring the frequency point corresponding to the TN cell. If the terminal device does not measure a TN cell in the first area and the first information indicates that the first area includes a TN-free coverage area, it can be considered that the terminal device may be located in the TN-free coverage area in the first area. In this case, the terminal device adopts a measurement strategy of stopping measuring the frequency point corresponding to the TN cell, which helps to avoid invalid measurement of the terminal device in the TN-free coverage area, thereby helping to save power of the terminal device.

By way of example, if the first information indicates that the first area does not include a TN-free coverage area, the measurement strategy is to continue to measure the frequency point corresponding to the TN cell, or the measurement strategy is to continuously detect the TN cell in the first area. Since the first area does not include a TN-free coverage area, adopting the foregoing measurement strategy helps the terminal device to access the TN cell, thereby obtaining better communication quality (such as a faster transmission rate). As an example, if the first information indicates that the first area does not include a TN-free coverage area and the terminal device does not measure the TN cell, the measurement strategy is to continue to measure the frequency point corresponding to the TN cell.

It can be seen that in the first area, the terminal device can first measure the TN cell, and then determine a further measurement strategy based on the first information and the measurement result of the TN cell. In this way, the power saving requirement and communication quality requirement of the terminal device can be balanced.

The measurement of the TN cell by the terminal device may mean that the terminal device can measure the TN cell within a certain period of time. The aforementioned "the terminal device does not measure the TN cell" may mean that the terminal device does not measure the TN cell within a certain period of time. The "certain period of time" mentioned here can be implemented via a timer. In actual use, the "certain period of time" (such as the value of the timer) can be indicated by the network device, or predefined, preconfigured, etc.

To further reduce power consumption of the terminal device, the measurement strategy of the terminal device in the first area may be associated with a first duration and/or a second duration, where the first duration is used for measuring TN cells in the first area including a TN-free coverage area, and the second duration is used for measuring TN cells in the first area not including a TN-free coverage area.

Limiting the measurement time of the terminal device for TN cells within the NTN coverage range through the first duration and/or the second duration helps to further save power of the terminal device. For example, when the terminal device is located in the first area that does not include a TN-free coverage area, that is, even if the terminal device is located in the coverage area of the TN cell, it may not be able to camp on or access the TN cell. In this case, the terminal device continuously measures the TN cell, which will consume some power. Controlling the duration of TN cell measurement by the terminal device through the second duration helps to avoid power consumption caused by the aforementioned scenarios.

The first duration and the second duration may be the same or different. In some embodiments, the first duration may be less than the second duration. That is, the duration for the terminal device to measure TN cells in the first area including a TN-free coverage area may be less than the duration for the terminal device to measure TN cells in the first area not including a TN-free coverage area, thereby helping to avoid invalid measurement of TN cells by the terminal device in the TN-free coverage area, and further helping to reduce power consumption of the terminal device.

The first duration and the second duration may be implemented by timers. For example, the first duration may be implemented by a first timer, and the second duration may be implemented by a second timer. Therefore, the measurement strategy of the terminal device in the first area may be associated with the first duration and/or the second duration, which may be rephrased as: the measurement strategy of the terminal device in the first area may be associated with the first timer and/or the second timer. The first timer may be associated with, for example, the duration for the terminal device to measure TN cells (that is, the first duration) in the first area including a TN-free coverage area; the second timer may be associated with, for example, the duration for the terminal device to measure TN cells (that is, the second duration) in the first area not including a TN-free coverage area.

In some embodiments, the start timing of the first timer and/or the start timing of the second timer is associated with the first information. For example, when the terminal device is located in the first area, the terminal device can determine whether to start the first timer and/or the second timer based on the first information. As an example, if the first information indicates that the first area includes a TN-free coverage area, the terminal device starts the first timer; if the first information indicates that the first area does not include a TN-free coverage area, the terminal device starts the second timer.

In some embodiments, the measurement strategy includes stopping measuring the frequency point corresponding to the TN cell in response to the timeout of the first timer and/or the timeout of the second timer. Controlling the TN cell measurement strategy of the terminal device in the first area including a TN-free coverage area or the first area not including a TN-free coverage area through the first timer and the second timer helps to further reduce power consumption of the terminal device.

In some embodiments, one or more of the first duration, the second duration, the timing duration of the first timer, and the timing duration of the second timer may be predefined information or preconfigured information. For example, the first duration and/or the second duration may be predefined by a protocol, preconfigured by a network device, or dynamically indicated by a network device to a terminal device; or the timing duration of the first timer and/or the second timer may be predefined by a protocol, preconfigured by a network device, or dynamically indicated by a network device to a terminal device.

The first area may include one or more frequency points of TN cells, so the measurement strategy can also be configured with frequency points as the granularity. By way of example, different timers are configured for different frequency points. To reduce the implementation complexity, the measurement strategy can be configured with virtual TN areas as the granularity. For example, the value of a timer associated with a virtual TN area can be determined based on the frequency point of each TN cell in the virtual TN area, such as based on the frequency point of the TN cell with the longest required measurement duration. That is, the value of the timer may be the maximum value of the measurement durations of the frequency points of multiple TN cells.

As mentioned above, the terminal device can obtain information related to TN cells within the coverage range of the NTN cell and/or information related to the virtual TN coverage area through auxiliary information. Then, how to determine the timing for the terminal device to obtain the foregoing information is a problem to be solved. For instance, whether the foregoing information needs to be re-obtained when the virtual TN coverage area within the coverage range of the NTN cell changes, and whether the foregoing information needs to be obtained when the NTN cell changes, are problems to be solved. It should be noted that the embodiments described below, which are related to determining the timing for the terminal device to obtain the foregoing information, can be implemented independently or in combination with other embodiments described above.

Generally, an NTN cell broadcasts auxiliary information in a system message. When a terminal device camps on or accesses an NTN cell, it can obtain the auxiliary information from the system message of the NTN cell. However, in some cases, the terminal device may not obtain the auxiliary information from the NTN cell to conserve power of the terminal device.

Since NTN cells are constantly moving and TN cells are not moving, multiple NTN cells may indicate TN cells in the same geographical area. In this case, the terminal device may be covered by two NTN cells successively. For example, the terminal device is first covered by a first NTN cell and then by a second NTN cell, that is, the location of the terminal device changes from the first NTN cell to the second NTN cell.

In some embodiments, when the location of the terminal device changes from the first NTN cell to the second NTN cell, if a first condition is met, the terminal device does not obtain second information from the second NTN cell.

The foregoing second information may be configured to indicate information related to TN cells within the coverage range of the second NTN cell. For example, the second information may be auxiliary information of the second NTN cell. For another example, the second information may include information about TN cells within the coverage range of the second NTN cell, or information about virtual TN areas within the coverage range of the second NTN cell.

The terminal device not obtaining the second information from the second NTN cell may mean that the terminal device does not request the second information from the second NTN cell and/or the terminal device does not accept the second information sent by the second NTN cell.

The foregoing first condition may be associated with one or more of the following: a measurement result of the terminal device for a TN cell in the first NTN cell; information about TN cells within the coverage range of the first NTN cell; and information about TN cells within the coverage range of the second NTN cell.

In some embodiments, the first condition is associated with information about TN cells within the coverage range of the first NTN cell and information about TN cells within the coverage range of the second NTN cell. For example, the first condition is that the TN cells within the coverage range of the first NTN cell are the same as the TN cells within the coverage range of the second NTN cell. That is, when the TN cells within the coverage range of the first NTN cell are the same as the TN cells within the coverage range of the second NTN cell, the terminal device does not obtain the second information from the second NTN cell. In this way, the terminal device can save power consumed for obtaining the second information from the second NTN cell.

It should be noted that since the way of dividing virtual TN areas may vary among NTN cells, when the TN cells within the coverage range of the first NTN cell are the same as the TN cells within the coverage range of the second NTN cell, the way of organizing virtual TN areas (also called division manner) within the coverage range of the first NTN cell may be the same as or different from the way of organizing virtual TN areas within the coverage range of the second NTN cell.

In some embodiments, whether the first condition is met may be determined by the first NTN cell and/or the second NTN cell. Before determining whether the first condition is met, the first NTN cell and the second NTN cell may first exchange information about TN cells within their respective coverage ranges. For example, the first NTN cell may send information about TN cells within its coverage range to the second NTN cell, and the second NTN cell may send information about TN cells within its coverage range to the first NTN cell. Based on this, the first NTN cell may determine whether the first condition is met, or the second NTN cell may determine whether the first condition is met. By way of further example, the first NTN cell may request the second NTN cell for information about TN cells within the coverage range of the second NTN cell, and then the first NTN cell may determine whether the first condition is met; or the second TN cell may request the first NTN cell for information about TN cells within the coverage range of the first NTN cell, and then the second NTN cell may determine whether the first condition is met. The determination of whether the first condition is met mentioned here may refer to determining whether the TN cells within the coverage range of the first NTN cell are the same as the TN cells within the coverage range of the second NTN cell.

In some embodiments, if the first condition is met, the terminal device receives third information sent by the first NTN cell and/or the second NTN cell. Or, the first NTN cell and/or the second NTN cell sends third information to the terminal device. The third information may be configured to notify the terminal device that the TN cells within the coverage range of the first NTN cell are the same as the TN cells within the coverage range of the second NTN cell. The transmission and reception of the third information helps the terminal device to know the determination result of the first condition.

Further, in response to receiving the third information, the terminal device does not obtain the second information from the second NTN cell, thereby helping to reduce power consumption of the terminal device.

In some embodiments, the first condition is associated with a measurement result of the terminal device for a TN cell in the first NTN cell. For example, the first condition may be that the terminal device measures a TN cell in the first NTN cell, and the TN cell measured in the first NTN cell is campable. By way of example, the first condition is that the terminal device is located within the coverage range of the virtual TN area, the terminal device measures a TN cell, and the TN cell measured in the first NTN cell is campable.

That is, when the terminal device measures a TN cell in the first NTN cell and the TN cell measured in the first NTN cell is campable, the terminal device does not obtain the second information from the second NTN cell. In some cases, if the terminal device measures a campable TN cell, the second information is likely to also include information about the TN cell. In this case, if the terminal device receives the second information, it also needs to measure the TN cell again based on the second information, i.e., the terminal device may need to measure the TN cell again, resulting in unnecessary power consumption. In some cases, if the terminal device measures a campable TN cell, the terminal device may access the TN cell. Therefore, not receiving the second information from the second NTN cell helps to avoid unnecessary power consumption incurred by obtaining the second information.

Conversely, if the terminal device located in the virtual TN area does not measure a TN cell, or the measured TN cell is not campable (for example, access to the TN cell is prohibited), the terminal device receives the second information from the second NTN cell. Thus, the terminal device can continue to measure the TN cell based on the second information.

Further, the terminal device can determine whether to receive the second information from the second NTN cell based on whether the TN cells within the coverage range of the second NTN cell are the same as the TN cells within the coverage range of the first NTN cell. That is, when the terminal device does not measure a TN cell or the measured TN cell is not campable, if the TN cells within the coverage range of the second NTN cell are the same as the TN cells within the coverage range of the first NTN cell, the terminal device still does not receive the second information from the second NTN cell to avoid repeated invalid measurements.

In some embodiments, if the first area changes and the TN cells within the coverage range of the first NTN cell do not change, the terminal device does not re-obtain or update information related to the TN cells within the coverage range of the first NTN cell, or the first NTN cell does not send fourth information to the terminal device. The fourth information is configured to notify the terminal device to re-obtain information related to the TN cells within the coverage range of the first NTN cell. That is, if the TN cells within the coverage range of the first NTN cell do not change, but the way of organizing virtual TN areas changes, the first NTN cell does not send a notification for updating TN cell-related information (e.g., auxiliary information or system information) to the terminal device.

Generally, virtual TN areas can be divided according to geographical areas or frequency points. FIGS. 4A to 5B respectively show example diagrams of ways to divide virtual TN areas in an NTN cell.

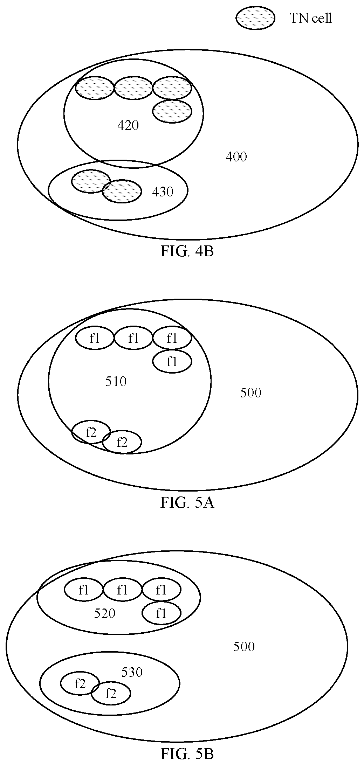

If the virtual TN area in the first NTN cell 400 is changed from the division manner in FIG. 4A to the division manner in FIG. 4B (that is, divided according to geographical areas), the first NTN cell does not send the fourth information to the terminal device. Specifically, FIG. 4A includes a virtual TN area 410, and FIG. 4B includes a virtual TN area 420 and a virtual TN area 430.

If the virtual TN area in the first NTN cell 500 is changed from the division manner in FIG. 5A to the division manner in FIG. 5B (that is, divided according to frequency points), the first NTN cell does not send the fourth information to the terminal device. Specifically, FIG. 5A includes a virtual TN area 510, which includes 4 TN cells with frequency point f1 (marked as f1 in FIG. 5A) and 2 TN cells with frequency point f2 (marked as f2 in FIG. 5A); FIG. 5B includes a virtual TN area 520 and a virtual TN area 530, where the virtual TN area 520 includes 4 TN cells with frequency point f1 (marked as f1 in FIG. 5B), and the virtual TN area 530 includes 2 TN cells with frequency point f2 (marked as f2 in FIG. 5B).

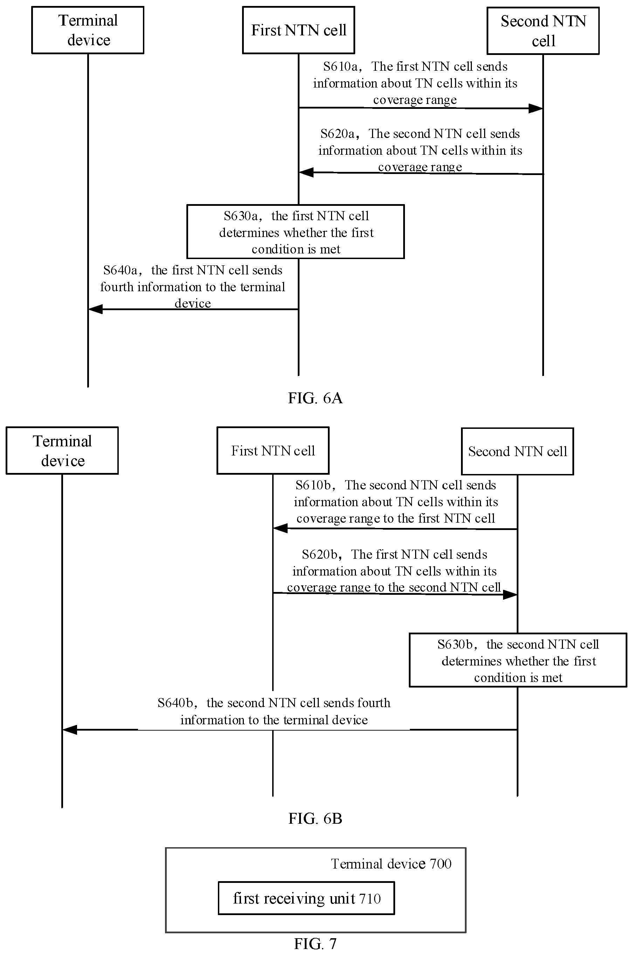

As mentioned above, when the first condition (the TN cells within the coverage range of the first NTN cell are the same as the TN cells within the coverage range of the second NTN cell) is met, the terminal device does not obtain the second information from the second NTN cell. The following describes the processes of two methods for determining whether the first condition is met provided by the embodiments of the present disclosure with reference to FIGS. 6A and 6B.

The method shown in FIG. 6A includes operations S610a to S640a, and involves a terminal device, a first NTN cell, and a second NTN cell.

In S610a, the first NTN cell sends information about TN cells within its coverage range to the second NTN cell.

The information about TN cells within the coverage range of the first NTN cell may be, for example, auxiliary information of the first NTN cell, or a list of TN cells within the coverage range of the first NTN cell.

In some embodiments, operation S610a may also be replaced with: the first NTN cell requests the second NTN cell for information about TN cells within the coverage range of the second NTN cell.

In S620a, the second NTN cell sends information about TN cells within its coverage range to the first NTN cell.

By way of example, in response to receiving the request message sent by the first NTN cell or receiving the information about TN cells within the coverage range of the first NTN cell sent by the first NTN cell, the second NTN cell sends information about TN cells within the coverage range of the second NTN cell to the first NTN cell.

In S630a, the first NTN cell determines whether the first condition is met.

The first NTN cell determines whether the first condition is met, i.e., the first NTN cell determines whether the TN cells within the coverage range of the first NTN cell are the same as the TN cells within the coverage range of the second NTN cell.

In some embodiments, if the first condition is not met, the first NTN cell may not send information to the terminal device, that is, if the first condition is not met, the first NTN cell does not perform the corresponding action.

In some embodiments, if the first condition is not met, the first NTN cell may send first indication information to the terminal device. The first indication information may be configured to, for example, instruct the terminal device to read TN coverage information of the next NTN cell (such as the second NTN cell). The first indication information may also be configured to, for example, instruct the terminal device to read TN coverage information of a specific NTN cell, and the first indication information may include the cell identifier of the specific NTN cell.

If the first condition is met, operation S640a is performed.

In S640a, the first NTN cell sends fourth information to the terminal device.

The fourth information is configured to notify the terminal device of the determination result of the first condition, that is, the fourth information is configured to notify the terminal device that the TN cells within the coverage range of the first NTN cell are the same as the TN cells within the coverage range of the second NTN cell. The fourth information may indicate the cell identifier of the second NTN cell or may not indicate the cell identifier of the second NTN cell. By way of example, when the fourth information does not indicate the cell identifier of the second NTN cell, the terminal device may consider that the NTN cell associated with the fourth information includes the NTN cell that covers the terminal device after the first NTN cell.

The method shown in FIG. 6B includes operations S610b to S640b, and involves a terminal device, a first NTN cell, and a second NTN cell.

In S610b, the second NTN cell sends information about TN cells within its coverage range to the first NTN cell.

The information about TN cells within the coverage range of the second NTN cell may be, for example, auxiliary information of the second NTN cell, or a list of TN cells within the coverage range of the second NTN cell.

In some embodiments, operation S610b may also be replaced with: the second NTN cell requests the first NTN cell for information about TN cells within the coverage range of the first NTN cell.

In S620b, the first NTN cell sends information about TN cells within its coverage range to the second NTN cell.

For example, in response to receiving the request message sent by the second NTN cell or receiving the information about TN cells within the coverage range of the second NTN cell sent by the second NTN cell, the first NTN cell sends information about TN cells within the coverage range of the first NTN cell to the second NTN cell.

In S630b, the second NTN cell determines whether the first condition is met.

The second NTN cell determines whether the first condition is met, i.e., the second NTN cell determines whether the TN cells within the coverage range of the first NTN cell are the same as the TN cells within the coverage range of the second NTN cell.

In some embodiments, if the first condition is not met, the second NTN cell may not send information to the terminal device, that is, if the first condition is not met, the second NTN cell does not perform the corresponding action.

In some embodiments, if the first condition is not met, the second NTN cell may send first indication information to the terminal device. The first indication information may be configured to, for example, instruct the terminal device to read TN coverage information of the second NTN cell, and the first indication information may include the cell identifier of the second NTN cell.

If the first condition is met, operation S640b is performed.

In S640b, the second NTN cell sends fourth information to the terminal device.

The fourth information is configured to notify the terminal device of the determination result of the first condition, that is, the fourth information is configured to notify the terminal device that the TN cells within the coverage range of the first NTN cell are the same as the TN cells within the coverage range of the second NTN cell. The fourth information may indicate the cell identifier of the second NTN cell or may not indicate the cell identifier of the second NTN cell. By way of example, when the fourth information does not indicate the cell identifier of the second NTN cell, the terminal device may consider that the NTN cell associated with the fourth information includes the NTN cell that covers the terminal device after the first NTN cell.

When the terminal device receives the fourth information, it does not need to receive the TN cell information broadcast by the second NTN cell or request the TN cell information from the second NTN cell.

Through the foregoing method, the number of times the terminal device reads TN cell information can be reduced, and the behavior of the terminal device to invalidly measure "non-existent TN cells" can be reduced, thereby reducing power consumption of the terminal device.

It should be noted that the actions performed by the NTN cell mentioned above (such as sending or receiving actions) may refer to actions of the network device corresponding to the NTN cell.

The method embodiments of the present disclosure are described in detail above with reference to FIGS. 1 to 6. The device embodiments of the present disclosure are described in detail below with reference to FIGS. 7 to 9. It should be understood that the description of the method embodiments corresponds to the description of the device embodiments, and thus, for parts not described in detail, reference may be made to the foregoing method embodiments.

FIG. 7 is a schematic structural diagram of a terminal device provided by an embodiment of the present disclosure. The terminal device 700 may include a first receiving unit 710.

The first receiving unit 710 is configured to receive first information sent by a first non-terrestrial network (NTN) cell, where the first information is configured to, specifically, indicate whether a TN-free coverage area is included in a first area, and the first area is a virtual TN coverage area associated with the first NTN cell.

In some embodiments, the first information is configured to determine a TN cell measurement strategy of the terminal device in the first area.

In some embodiments, the TN cell measurement strategy of the terminal device in the first area includes stopping measurement of the frequency point corresponding to the TN cell and/or continuing to measurement of the frequency point corresponding to the TN cell.

In some embodiments, the first information is configured to determine a TN cell measurement strategy of the terminal device in the first area, and includes: if the first information indicates that the first area includes a TN-free coverage area and the terminal device does not measure the TN cell, the measurement strategy is to stop measuring the frequency point corresponding to the TN cell; and/or if the first information indicates that the first area does not include a TN-free coverage area and the terminal device does not measure the TN cell, the measurement strategy is to continue to measure the frequency point corresponding to the TN cell.

In some embodiments, the measurement strategy is associated with a first duration and/or a second duration, where the first duration is used for measuring TN cells in the first area including a TN-free coverage area, and the second duration is used for measuring TN cells in the first area not including a TN-free coverage area.

In some embodiments, the first duration is less than the second duration.

In some embodiments, the device further includes: a first processing unit, configured to, when the location of the terminal device changes from the first NTN cell to a second NTN cell, if a first condition is met, the terminal device does not obtain second information from the second NTN cell, where the second information is configured to indicate information related to TN cells within the coverage range of the second NTN cell; the first condition is associated with one or more of the following: a measurement result of the terminal device for a TN cell in the first NTN cell; information about TN cells within the coverage range of the first NTN cell; and information about TN cells within the coverage range of the second NTN cell.

In some embodiments, the first condition is associated with information about TN cells within the coverage range of the first NTN cell and information about TN cells within the coverage range of the second NTN cell, and includes: the first condition is that the TN cells within the coverage range of the first NTN cell are the same as the TN cells within the coverage range of the second NTN cell.

In some embodiments, whether the first condition is met is determined by the first NTN cell and/or the second NTN cell.

In some embodiments, the device further includes: a second receiving unit, configured to receive third information sent by the first NTN cell and/or the second NTN cell if the first condition is met, where the third information is configured to notify the terminal device that the TN cells within the coverage range of the first NTN cell are the same as the TN cells within the coverage range of the second NTN cell.

In some embodiments, the terminal device not obtaining second information from the second NTN cell if the first condition is met includes: in response to receiving the third information, the terminal device does not obtain the second information from the second NTN cell.

In some embodiments, the first condition is associated with a measurement result of the terminal device for a TN cell in the first NTN cell, and includes: the first condition is that the terminal device measures a TN cell in the first NTN cell, and the TN cell measured in the first NTN cell is campable.

In some embodiments, the device further includes: a third processing unit, configured to, if the first area changes and the TN cells within the coverage range of the first NTN cell do not change, the terminal device does not update information related to the TN cells within the coverage range of the first NTN cell.

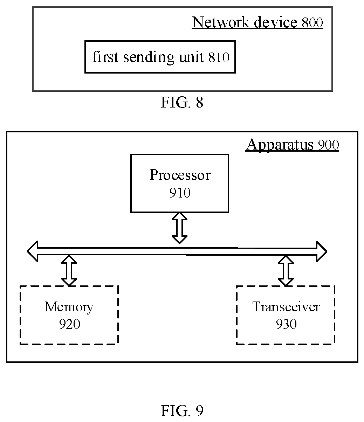

FIG. 8 is a schematic structural diagram of a network device provided by an embodiment of the present disclosure. The network device 800 may be a network device corresponding to a first non-terrestrial network (NTN) cell, and the network device 800 may include a first sending unit 810.

The first sending unit 810 is configured to send first information to a terminal device, where the first information is configured to indicate whether a TN-free coverage area is included in a first area, and the first area is a virtual TN coverage area associated with the first NTN cell.

In some embodiments, the first information is configured to determine a TN cell measurement strategy of the terminal device in the first area.

In some embodiments, the TN cell measurement strategy of the terminal device in the first area includes stopping measuring the frequency point corresponding to the TN cell and/or continuing to measure the frequency point corresponding to the TN cell.

In some embodiments, the first information is configured to determine a TN cell measurement strategy of the terminal device in the first area, and includes: if the first information indicates that the first area includes a TN-free coverage area and the terminal device does not measure the TN cell, the measurement strategy is to stop measuring the frequency point corresponding to the TN cell; and/or if the first information indicates that the first area does not include a TN-free coverage area and the terminal device does not measure the TN cell, the measurement strategy is to continue to measure the frequency point corresponding to the TN cell.

In some embodiments, the measurement strategy is associated with a first duration and/or a second duration, where the first duration is used for TN cell measurement in the first area including a TN-free coverage area, and the second duration is used for measuring TN cells in the first area not including a TN-free coverage area.

In some embodiments, the first duration is less than the second duration.

In some embodiments, the device further includes: a determining unit, configured to determine whether the TN cells within the coverage range of the first NTN cell are the same as the TN cells within the coverage range of the second NTN cell when the location in which the terminal device is located changes from the first NTN cell to a second NTN cell.

In some embodiments, the device further includes: a second sending unit, configured to send third information to the terminal device if the TN cells within the coverage range of the first NTN cell are the same as the TN cells within the coverage range of the second NTN cell, where the third information is configured to notify the terminal device that the TN cells within the coverage range of the first NTN cell are the same as the TN cells within the coverage range of the second NTN cell.

In some embodiments, the device further includes: a processing unit, configured to refrain from sending fourth information to the terminal device if the first area changes and the TN cells within the coverage range of the first NTN cell do not change, where the fourth information is configured to notify the terminal device to re-obtain information related to the TN cells within the coverage range of the first NTN cell.

In optional embodiments, the first sending unit, the second sending unit, the first receiving unit, and the second receiving unit described above may be a transceiver 930; the processing unit described above may be a processor 910. The terminal device 700 and the network device 800 may further include a memory 920, as shown in FIG. 9.

FIG. 9 is a schematic structural diagram of a communication apparatus according to an embodiment of the present disclosure. The dashed line in FIG. 9 indicates that the unit or module is optional. The apparatus 900 may be configured to implement the methods described in the foregoing method embodiments. The apparatus 900 may be a chip, a terminal device, or a network device.

The apparatus 900 may include one or more processors 910. The processor 910 may support the apparatus 900 to implement the methods described in the foregoing method embodiments. The processor 910 may be a general-purpose processor or a special-purpose processor. For example, the processor may be a central processing unit (CPU). Alternatively, the processor may be another general-purpose processor, a digital signal processor (DSP), an application specific integrated circuit (ASIC), a field-programmable gate array (FPGA) or another programmable logic device, a discrete gate or transistor logic device, or a discrete hardware component. The general-purpose processor may be a microprocessor, or the processor may be any conventional processor, etc.

The apparatus 900 may further include one or more memories 920. One or more programs are stored in the memory 920, and the program may be executed by the processor 910, so that the processor 910 performs the methods described in the foregoing method embodiments. The memory 920 may be independent of the processor 910 or integrated with the processor 910.

The apparatus 900 may further include a transceiver 930. The processor 910 may communicate with other devices or chips through the transceiver 930. For example, the processor 910 may send and receive data to or from another device or chip through the transceiver 930.

An embodiment of the present disclosure further provides a computer-readable storage medium for storing a program. The computer-readable storage medium may be applied to the terminal or the network device provided in the embodiments of the present disclosure, and the program causes a computer to perform the methods to be performed by the terminal or the network device in various embodiments of the present disclosure.

An embodiment of the present disclosure further provides a computer program product. The computer program product includes one or more programs. The computer program product may be applied to the terminal or the network device provided in the embodiments of the present disclosure, and the program causes a computer to perform the methods to be performed by the terminal or the network device in various embodiments of the present disclosure.

An embodiment of the present disclosure further provides a computer program. The computer program may be applied to the terminal or the network device provided in the embodiments of the present disclosure, and the computer program causes a computer to perform the methods to be performed by the terminal or the network device in various embodiments of the present disclosure.

It should be understood that the terms "system" and "network" in the present disclosure may be used interchangeably. In addition, the terms used in the present disclosure are only configured to explain the specific embodiments of the present disclosure, and are not intended to limit the present disclosure. The terms "first", "second", "third", "fourth", and the like in the specification, claims, and drawings of the present disclosure are configured to distinguish between different objects, rather than to describe a specific order. In addition, the terms "comprise" and "have" and any variations thereof are intended to cover a non-exclusive inclusion.

In the embodiments of the present disclosure, "indicate" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In the embodiments of the present disclosure, "B that is corresponding to A" means that B is associated with A, and B may be determined based on A. However, it should also be understood that, determining B based on A does not mean determining B based only on A, but instead B may be determined based on A and/or other information.

In the embodiments of the present disclosure, the term "corresponding" may mean that there is a direct or indirect correspondence between the two, or may mean that there is an association relationship between the two, or may mean that there is a relationship such as indicating and being indicated, or configuring and being configured.

In the embodiments of the present disclosure, "predefined" or "pre-configured" may be implemented by pre-storing corresponding codes, tables, or other forms that may be configured to indicate related information in devices (for example, including the terminal device and the network device), and a specific implementation thereof is not limited in the present disclosure. For example, pre-defined may refer to defined in the protocol.

In the embodiments of the present disclosure, the "protocol" may refer to a standard protocol in the communications field, and may include, for example, an LTE protocol, an NR protocol, and a related protocol applied to a future communications system, which is not limited in the present disclosure.

In the embodiments of the present disclosure, the term "and/or" is merely configured to describe an association relationship between associated objects, indicating that there may be three relationships. For example, A and/or B may indicate that: only A exists, both A and B exist, and only B exists. In addition, the character "/" herein generally indicates an "or" relationship between the associated objects.

In the embodiments of the present disclosure, sequence numbers of the foregoing processes do not mean execution sequences. The execution sequences of the processes should be determined according to functions and internal logic of the processes, and should not be construed as any limitation on the implementation processes of the embodiments of the present disclosure.

In several embodiments provided in the present disclosure, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to an actual need to achieve the objectives of the solutions of the embodiments.

In addition, function units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is configured to implement embodiments, the foregoing embodiments may be implemented completely or partially in a form of a computer program product. The computer program product includes one or more computer instructions. When the computer program instructions are loaded and executed on a computer, the procedures or functions according to the embodiments of the present disclosure are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital versatile disc (DVD)), a semiconductor medium (for example, a solid-state drive (SSD)), or the like.

The foregoing descriptions are merely specific implementations of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method for wireless communication, comprising:
receiving, by a terminal device, first information sent by a first non-terrestrial network (NTN) cell, wherein the first information is configured to indicate whether a TN-free coverage area is included in a first area, and the first area is a virtual TN coverage area associated with the first NTN cell.

2. The method according to claim 1, wherein the first information is further configured to determine a TN cell measurement strategy of the terminal device within the first area.

3. The method according to claim 2, wherein the TN cell measurement strategy of the terminal device within the first area comprises stopping measurement of a frequency point corresponding to the TN cell, and/or continuing measurement of a frequency point corresponding to the TN cell.

4. The method according to claim 2 or 3, wherein determining the TN cell measurement strategy of the terminal device within the first area comprises:
in response to the first information indicating that the first area includes a TN-free coverage area and the terminal device does not measure the TN cell, setting the measurement strategy to stop measuring the frequency point corresponding to the TN cell; and/or
in response to the first information indicating that the first area does not include a TN-free coverage area and the terminal device does not measure the TN cell, setting the measurement strategy to continue measuring the frequency point corresponding to the TN cell.

5. The method according to any one of claims 2 to 4, wherein the measurement strategy is associated with a first duration and/or a second duration, wherein the first duration is used for TN cell measurement in the first area including the TN-free coverage area, and the second duration is used for TN cell measurement in the first area not including the TN-free coverage area.

6. The method according to claim 5, wherein the first duration is less than the second duration.

7. The method according to any one of claims 1 to 6, wherein the method further includes:
in response to the location of the terminal device changing from the first NTN cell to a second NTN cell, and a first condition being satisfied, causing the terminal device not to obtain second information from the second NTN cell, wherein the second information is configured to indicate information associated with TN cells within the coverage of the second NTN cell;
the first condition being associated with one or more of the following:
a TN cell measurement result of the terminal device in the first NTN cell;
information about TN cells within the coverage of the first NTN cell; and
information about TN cells within the coverage of the second NTN cell.

8. The method according to claim 7, wherein the first condition associated with information about TN cells within the coverage of the first NTN cell and information about TN cells within the coverage of the second NTN cell, comprises:
the first condition being that the TN cells within the coverage of the first NTN cell are the same as the TN cells within the coverage of the second NTN cell.

9. The method according to claim 8, wherein whether the first condition is satisfied is determined by the first NTN cell and/or the second NTN cell.

10. The method according to claim 8 or 9, wherein the method further includes:
in response to the first condition being satisfied, causing the terminal device to receive third information sent by the first NTN cell and/or the second NTN cell, wherein the third information is configured to notify the terminal device that the TN cells within the coverage of the first NTN cell are the same as the TN cells within the coverage of the second NTN cell.

11. The method according to claim 10, wherein the terminal device not obtaining the second information from the second NTN cell in accordance with a determination that the first condition is satisfied comprises:
in accordance with a determination that the terminal device receives the third information, causing the terminal device not to obtain the second information from the second NTN cell.

12. The method according to any one of claims 7 to 11, wherein the first condition associated with the TN cell measurement result of the terminal device in the first NTN cell, comprises:
the first condition being that the terminal device measures a TN cell in the first NTN cell, and the TN cell measured in the first NTN cell is campable.

13. The method according to any one of claims 1 to 12, wherein the method further includes:
in accordance with a determination that the first area changes and the TN cells within the coverage of the first NTN cell remain unchanged, causing the terminal device not to update information associated with the TN cells within the coverage of the first NTN cell.

14. A method for wireless communication, comprising:
sending, by a network device, first information to a terminal device, wherein the first information is configured to indicate whether a TN-free coverage area is included in a first area; the network device is a network device corresponding to a first non-terrestrial network (NTN) cell; and the first area is a virtual TN coverage area associated with the first NTN cell.

15. The method according to claim 14, wherein the first information is configured to determine a TN cell measurement strategy of the terminal device within the first area.

16. The method according to claim 15, wherein the TN cell measurement strategy of the terminal device within the first area comprises stopping measurement of a frequency point corresponding to the TN cell, and/or continuing measurement of a frequency point corresponding to the TN cell.

17. The method according to claim 15 or 16, wherein determining the TN cell measurement strategy of the terminal device within the first area comprises:
in response to the first information indicating that the first area includes a TN-free coverage area and the terminal device does not measure the TN cell, setting the measurement strategy to stop measuring the frequency point corresponding to the TN cell; and/or
in response to the first information indicating that the first area does not include a TN-free coverage area and the terminal device does not measure the TN cell, setting the measurement strategy to continue measuring the frequency point corresponding to the TN cell.

18. The method according to any one of claims 15 to 17, wherein the measurement strategy is associated with a first duration and/or a second duration, wherein the first duration is used for TN cell measurement in the first area including the TN-free coverage area, and the second duration is used for TN cell measurement in the first area not including the TN-free coverage area.

19. The method according to claim 18, wherein the first duration is less than the second duration.

20. The method according to any one of claims 14 to 19, wherein the method further includes:
in response to the location of the terminal device changing from the first NTN cell to a second NTN cell, causing the network device to determine whether the TN cells within the coverage of the first NTN cell are the same as the TN cells within the coverage of the second NTN cell.

21. The method according to claim 20, wherein the method further includes:
in response to the TN cells within the coverage of the first NTN cell being the same as the TN cells within the coverage of the second NTN cell, causing the network device to send third information to the terminal device, wherein the third information is configured to notify the terminal device that the TN cells within the coverage of the first NTN cell are the same as the TN cells within the coverage of the second NTN cell.

22. The method according to any one of claims 14 to 21, wherein the method further includes:
in response to the first area changes and the TN cells within the coverage of the first NTN cell remain unchanged, causing the network device to refrain from sending fourth information to the terminal device, wherein the fourth information is configured to notify the terminal device to re-obtain information associated with the TN cells within the coverage of the first NTN cell.

23. A terminal device, comprising:
a first receiving unit, configured to receive first information sent by a first non-terrestrial network (NTN) cell, wherein the first information is configured to indicate whether a TN-free coverage area is included in a first area, and the first area is a virtual TN coverage area associated with the first NTN cell.

24. The device according to claim 23, wherein the first information is configured to determine a TN cell measurement strategy of the terminal device within the first area.

25. The device according to claim 24, wherein the TN cell measurement strategy of the terminal device within the first area comprises stopping measurement of a frequency point corresponding to the TN cell, and/or continuing measurement of a frequency point corresponding to the TN cell.

26. The device according to claim 24 or 25, wherein determining the TN cell measurement strategy of the terminal device within the first area comprises:
in response to the first information indicating that the first area includes a TN-free coverage area and the terminal device does not measure the TN cell, setting the measurement strategy to stop measuring the frequency point corresponding to the TN cell; and/or
in response to the first information indicating that the first area does not include a TN-free coverage area and the terminal device does not measure the TN cell, setting the measurement strategy to continue measuring the frequency point corresponding to the TN cell.

27. The device according to any one of claims 24 to 26, wherein the measurement strategy is associated with a first duration and/or a second duration, wherein the first duration is used for TN cell measurement in the first area including the TN-free coverage area, and the second duration is used for TN cell measurement in the first area not including the TN-free coverage area.

28. The device according to claim 27, wherein the first duration is less than the second duration.

29. The device according to any one of claims 23 to 28, wherein the device further includes a first processing unit configured to:
in response to the location of the terminal device changing from the first NTN cell to a second NTN cell, and a first condition being satisfied
, cause the terminal device not to obtain second information from the second NTN cell, wherein the second information is configured to indicate information associated with TN cells within the coverage of the second NTN cell;
the first condition being associated with one or more of the following:
a TN cell measurement result of the terminal device in the first NTN cell;
information about TN cells within the coverage of the first NTN cell; and
information about TN cells within the coverage of the second NTN cell.

30. The device according to claim 29, wherein the first condition associated with information about TN cells within the coverage of the first NTN cell and information about TN cells within the coverage of the second NTN cell, comprises:
the first condition being that the TN cells within the coverage of the first NTN cell are the same as the TN cells within the coverage of the second NTN cell.

31. The device according to claim 30, wherein whether the first condition is satisfied is determined by the first NTN cell and/or the second NTN cell.

32. The device according to claim 30 or 31, wherein the device further includes a second receiving unit configured to:
in response to the first condition being satisfied, receive third information sent by the first NTN cell and/or the second NTN cell, wherein the third information is configured to notify the terminal device that the TN cells within the coverage of the first NTN cell are the same as the TN cells within the coverage of the second NTN cell.

33. The device according to claim 32, wherein the terminal device not obtaining the second information from the second NTN cell in accordance with a determination that the first condition is satisfied comprises:
in accordance with a determination that the terminal device receives the third information, causing the terminal device not to obtain the second information from the second NTN cell.

34. The device according to any one of claims 29 to 33, wherein the first condition associated with the TN cell measurement result of the terminal device in the first NTN cell, comprises:
the first condition being that the terminal device measures a TN cell in the first NTN cell, and the TN cell measured in the first NTN cell is campable.

35. The device according to any one of claims 23 to 34, wherein the device further includes a third processing unit configured to:
in accordance with a determination that the first area changes and the TN cells within the coverage of the first NTN cell remain unchanged, cause the terminal device not to update information associated with the TN cells within the coverage of the first NTN cell.

36. A network device, the network device is a network device corresponding to a first non-terrestrial network (NTN) cell, and comprising:
a first sending unit, configured to send first information to a terminal device, wherein the first information is configured to indicate whether a TN-free coverage area is included in a first area, and the first area is a virtual TN coverage area associated with the first NTN cell.

37. The device according to claim 36, wherein the first information is configured to determine a TN cell measurement strategy of the terminal device within the first area.

38. The device according to claim 37, wherein the TN cell measurement strategy of the terminal device within the first area comprises stopping measurement of a frequency point corresponding to the TN cell, and/or continuing measurement of a frequency point corresponding to the TN cell.

39. The device according to claim 37 or 38, wherein determining the TN cell measurement strategy of the terminal device within the first area comprises:
in response to the first information indicating that the first area includes a TN-free coverage area and the terminal device does not measure the TN cell, setting the measurement strategy to stop measuring the frequency point corresponding to the TN cell; and/or
in response to the first information indicating that the first area does not include a TN-free coverage area and the terminal device does not measure the TN cell, setting the measurement strategy to continue measuring the frequency point corresponding to the TN cell.

40. The device according to any one of claims 37 to 39, wherein the measurement strategy is associated with a first duration and/or a second duration, wherein the first duration is used for TN cell measurement in the first area including the TN-free coverage area, and the second duration is used for TN cell measurement in the first area not including the TN-free coverage area.

41. The device according to claim 40, wherein the first duration is less than the second duration.

42. The device according to any one of claims 36 to 41, wherein the device further includes a determining unit configured to:
in response to the location of the terminal device changing from the first NTN cell to a second NTN cell, determine whether the TN cells within the coverage of the first NTN cell are the same as the TN cells within the coverage of the second NTN cell.

43. The device according to claim 42, wherein the device further includes a second sending unit configured to:
in response to the TN cells within the coverage of the first NTN cell being the same as the TN cells within the coverage of the second NTN cell, send third information to the terminal device, wherein the third information is configured to notify the terminal device that the TN cells within the coverage of the first NTN cell are the same as the TN cells within the coverage of the second NTN cell.

44. The device according to any one of claims 36 to 43, wherein the device further includes a processing unit configured to:
in response to the first area changes and the TN cells within the coverage of the first NTN cell remain unchanged, refrain from sending fourth information to the terminal device, wherein the fourth information is configured to notify the terminal device to re-obtain information associated with the TN cells within the coverage of the first NTN cell.

45. A terminal device, comprising a memory and a processor, wherein the memory is configured to store one or more programs, and the processor is configured to call the programs in the memory to cause the terminal device to perform the method according to any one of claims 1 to 13.

46. A network device, comprising a memory and a processor, wherein the memory is configured to store one or more programs, and the processor is configured to call the programs in the memory to cause the network device to perform the method according to any one of claims 14 to 22.

47. An apparatus, including a processor configured to call a program from a memory, so that the apparatus performs the method according to any one of claims 1 to 13 or any one of claims 14 to 22.

48. A chip, having a processor configured to call a program from a memory, so that a device installed with the chip performs the method according to any one of claims 1 to 13 or any one of claims 14 to 22.

49. A computer-readable storage medium, wherein a program is stored thereon, and the program enables a computer to perform the method according to any one of claims 1 to 13 or any one of claims 14 to 22.

50. A computer program product, comprising a program, wherein the program enables a computer to perform the method according to any one of claims1 to 13 or any one of claims 14 to 22.

51. A computer program, wherein the computer program enables a computer to perform the method according to any one of claims 1 to 13 or any one of claims 14 to 22.
